# EUROPÄISCHE PATENTSCHRIFT

(11) **EP 1 075 075 B1**
(45) Veröffentlichungstag und Bekanntmachung des Hinweises auf die Patenterteilung: **03.11.2004**
(21) Anmeldenummer: 00112474.2
(22) Anmeldetag: 10.06.2000
(51) Int. Cl.: H02K 5/24

(54) **Anordnung zur schwingungsisolierenden Halterung eines Elektromotors**
Arrangement for a vibration insulating support of an electric motor
Dispositif pour le montage isolant des vibrations d'un moteur électrique

(30) Priorität: 31.07.1999 DE 19936178
(43) Veröffentlichungstag der Anmeldung: 07.02.2001
(73) Patentinhaber: ebm-papst Mulfingen GmbH & Co.KG, 74673 Mulfingen (DE)
(72) Erfinder: Bertolini, Thomas Dr.-Ing., 77866 Rheinau (DE)
(74) Vertreter: Patentanwälte Dr. Solf & Zapf

(56) Entgegenhaltungen:
- US-A- 3 506 226
- US-A- 4 452 417

## Beschreibung

Die vorliegende Erfindung betrifft eine Anordnung zur schwingungsisolierenden Halterung eines Elektromotors an einem Trägerteil sowie ein in dieser Anordnung verwendetes Trägerelement, welches einen Motor-Halteabschnitt zum Verbinden mit dem Elektromotor und einen Träger-Halteabschnitt zum Verbinden mit dem Trägerteil aufweist, wobei die beiden Halteabschnitte über elastische, stegartige Verbindungsstücke verbunden sind, die derart ausgelegt sind, daß die beiden Halteabschnitte dreidimensional, in allen Raumrichtungen, und zwar axial, radial und tangential, über einen bestimmten Bewegungsspielraum hinweg relativ zueinander elastisch beweglich sind, wobei die beiden Halteabschnitte und die Verbindungsstücke miteinander einstückig ausgebildet sind.

Eine schwingungsisolierende Anordnung - jedoch ohne einstückige Ausbildung der genannten Abschnitte und Verbindungsstücke - ist aus dem deutschen Gebrauchsmuster DE-U-297 22 852 bekannt und hat sich in der Praxis hinsichtlich ihrer Funktionalität gut bewährt. Mit dieser Anordnung kann auch bei großen und schweren Motoren, die gegebenenfalls mit einem angetriebenen Teil, beispielsweise einem Lüfterrad, eine Einheit bilden, sicher vermieden werden, daß es zu direkten Anschlägen zwischen Motor- und Gehäuseteilen kommt, so daß auch daraus eventuell resultierende Unwuchtverschiebungen praktisch ausgeschlossen sind. Die beiden Halteabschnitte und die Verbindungsstücke sind dabei als separate Einzelteile miteinander auf geeignete Weise zu verbinden. So greifen die Halteabschnitte der bekannten Anordnung jeweils radial und axial mit einem Bewegungsspielraum ineinander. Die Verbindungsstücke sind im radial äußeren Bereich mit dem Träger-Halteabschnitt sowie im radial inneren Bereich mit dem Motor-Halteabschnitt verbunden, und zwar insbesondere über kraft- und/oder formschlüssige Verbindungen. Es sind Anschlagmittel vorhanden, die zumindest teilweise von derart elastisch verformbaren Elementen der Halteabschnitte gebildet sind, daß Relativbewegungen elastisch aufgefangen und hierdurch relativ sanft abgebremst werden können. Hiermit werden eventuelle Anschlaggeräusche vermieden. Der Motor-Halteabschnitt ist mit mindestens zwei über den Umfang verteilt angeordneten und in Umfangsrichtung insbesondere konzentrisch kreisbogenförmig verlaufenden Anschlagstegen verbunden, die jeweils von mindestens zwei klauenartigen Anschlagstücken des Träger-Halteabschnittes axial und radial umgriffen werden. Hierbei sind die einander jeweils paarweise in radialer Richtung gegenüberliegenden Anschlagstücke in radialer Richtung derart elastisch verformbar ausgebildet, daß bei einem axialen Zusammenfügen der beiden Halteabschnitte die Anschlagstege jeweils radial zwischen die beiden paarweise zugehörigen Anschlagstücke einrastbar sind. Die Anschlagmittel wirken dabei einerseits im Betriebszustand, wenn es z.B. zu Relativbewegungen aufgrund von plötzlichen Drehzahländerungen kommt, andererseits wird aber auch eine effektive Transportsicherung erreicht, indem auch bei abrupten Bewegungen des gesamten jeweiligen Gerätes, beispielsweise eines Lüfters, alle Relativbewegungen sehr schonend über die erfindungsgemäßen Anschlagmittel des Trägerelementes abgefangen werden. Es werden hierdurch harte Schläge vermieden.

Des Weiteren ist ein schwingungsisolierendes, als "Motor Bracket" bezeichnetes, mit einem Gehäuse verschraubbares Trägerelement mit den Merkmalen des Oberbegriffs des Anspruchs 1 aus der US-A-3 506 226 bekannt.

Neben der Forderung nach einer funktionssicheren Wirkungsweise von Vorrichtungen besteht in der Praxis auch immer ein Bedürfnis nach immer wirtschaftlicherer Fertigung. So wachsen die Anforderungen hinsichtlich einer materialökonomisch günstigen, montagetechnisch aufwandsarmen und damit kostenoptimierten Fertigung beständig.

Der vorliegenden Erfindung liegt die Aufgabe zugrunde, ausgehend von dem beschriebenen Stand der Technik ein Trägerelement und eine Anordnung der gattungsgemäßen Art zu schaffen, die bei hoher Funktionalität mit verringertem Aufwand herstellbar ist, insbesondere dadurch, daß sie höheren Anforderungen an ihre Montagefreundlichkeit und an einen sparsamen Materialeinsatz gerecht wird. Die erfindungsgemäße Anordnung soll des weiteren insbesondere auch verhindern, daß von einem Gebläsemotor erzeugte Schwingungen (Körperschall) auf ein Gebläsegehäuse als Trägerteil übertragen werden, was vor allem bei Gebläsen wichtig ist, die in Gasthermen eingesetzt werden, um die Verbrennungsluft (und eventuell auch das Gas) dem Brenner zuzuführen.

Erfindungsgemäß wird diese Aufgabe bei einem gattungsgemäßen Trägerelement dadurch gelöst, daß der Träger-Halteabschnitt zur Befestigung am Trägerteil federelastische Klemmteile aufweist. In der erfindungsgemäßen Anordnung kommt ein solches Element zur Anwendung.

Durch die Erfindung kann vorteilhafterweise auf den Einsatz von Anschlagmitteln verzichtet werden, wodurch sich der Herstellungsaufwand gegenüber der oben beschriebenen bekannten Anordnung wesentlich reduziert. Die Erfindung ist dabei sowohl für Außenläufer- als auch für Innenläufermotoren anwendbar. Was das erfindungsgemäße Trägerelement betrifft, so weist dieses gegenüber der bekannten Motorklammer bei hoher Funktionalität ebenfalls eine vereinfachte Montagemöglichkeit auf.

Die federelastischen Klemmteile können dabei mit Vorteil als Klemmbrille ausgebildet sein, was einerseits eine einfache Fertigung und Montage, andererseits aber auch eine sichere Befestigung und optimale Federwirkung garantiert.

Besonders zweckmäßig ist es dabei, die Halteabschnitte und die Verbindungsstücke als ein Biege-Stanzteil, insbesondere aus Metall (Federstahlblech) herzustellen. Dadurch können bei minimalem Fertigungsaufwand hohe Massen und Reaktionskräfte abgestützt werden. Ferner kann durch einfaches Austauschen bzw. einfache Auswahl der jeweils entsprechend unterschiedlich ausgelegten Verbindungsstücke eine schnelle Anpassung an unterschiedliche Erfordernisse beim jeweiligen Anwendungsfall vorgenommen werden.

In bevorzugter Anwendung wird das Trägerelement axial zwischen dem - insbesondere von einer im wesentlichen ebenen Gehäusewandung eines Gebläses gebildeten - Trägerteil und dem Elektromotor angeordnet, wobei der Elektromotor zum Antrieb des Gebläserades dient. Eine Motorwelle erstreckt sich hierbei zentrisch durch das Trägerelement und durch eine Öffnung der Gebläse-Gehäusewandung hindurch und ist innerhalb des Gebläsegehäuses mit dem Gebläserad verbunden. Hierbei ist folglich der Träger-Halteabschnitt auf seiner von dem Elektromotor axial abgekehrten Seite mit dem Trägerteil verbunden, während der Motor-Halteabschnitt auf seiner von dem Trägerteil axial abgekehrten Seite mit dem Elektromotor verbunden ist. Die beiden Halteabschnitte besitzen hierzu jeweils scheibenförmige Wandungsabschnitte, die voneinander axial beabstandet sind. Der Motor-Halteabschnitt kann dabei bevorzugt als zentrale, insbesondere kreisförmige, Basisscheibe ausgebildet sein, von der sich die Verbindungsstücke radial nach außen erstrecken.

Der Motor-Halteabschnitt kann einerseits mit dem Motor verschraubt werden, andererseits ist es aber in bevorzugter Ausführung auch möglich, daß auch der Motor-Halteabschnitt zum Verbinden mit dem Elektromotor mindestens ein federelastisches Klemmteil aufweist, das vorzugsweise an einer zentrischen Durchführöffnung des Trägerelementes für eine Motorwelle angeordnet sein kann.

Die Verbindungsstücke können dabei bevorzugt zwischen ihren radial äußeren und inneren, insbesondere jeweils in radialer Richtung etwa auf dem gleichen Radius gegenüberliegenden Endbereichen einen verlängerten, die elastische Beweglichkeit erhöhenden Verlauf aufweisen, wie dies an sich aus dem deutschen Gebrauchsmuster DE 297 22 852 U1 bekannt ist.

Weitere vorteilhafte Ausgestaltungsmerkmale der Erfindung sind in den Unteransprüchen sowie der folgenden Beschreibung enthalten.

Anhand mehrerer in der Zeichnung dargestellter, bevorzugter Ausführungsbeispiele soll im folgenden die Erfindung näher erläutert werden. Dabei zeigen:
- Fig. 1: einen Axialschnitt durch einen Elektromotor und ein Gebläse als Trägerteil, wobei zur schwingungsisolierenden Halterung eine erste Ausführung der Erfindung in der dargestellten Anordnung vorgesehen ist,
- Fig. 2: eine Aufsicht auf das Gebläse gemäß der in Fig. 1 gezeigten Ausführung in der Ebene II-II,
- Fig. 3: eine Aufsicht auf die erste Ausführung der Erfindung in einer der Fig. 2 entsprechenden Darstellung, jedoch ohne das Gebläse,
- Fig. 4: eine Schnittdarstellung der ersten Ausführung der Erfindung in einer Fig. 1 entsprechenden Darstellung, jedoch weder mit Elektromotor noch mit Gebläse,
- Fig. 5: eine vergrößerte Darstellung eines Verbindungsstücks aus Fig. 3,
- Fig. 6: eine Aufsicht auf eine zweite Ausführung einer erfindungsgemäßen Anordnung in einer Fig. 3 entsprechenden Darstellung,
- Fig. 7: eine Schnittdarstellung einer zweiten Ausführung der Erfindung in einer Fig. 4 entsprechenden Darstellung,
- Fig. 8: eine Aufsicht auf eine dritte Ausführung der Erfindung in einer Fig. 3 entsprechenden Darstellung,
- Fig. 9: eine Schnittdarstellung der dritten Ausführung der erfindungsgemäßen Anordnung in einer Fig. 4 entsprechenden Darstellung.

In den verschiedenen Figuren der Zeichnung sind gleiche Teile stets mit den gleichen Bezugszeichen versehen und werden daher in der Regel jeweils nur einmal beschrieben.

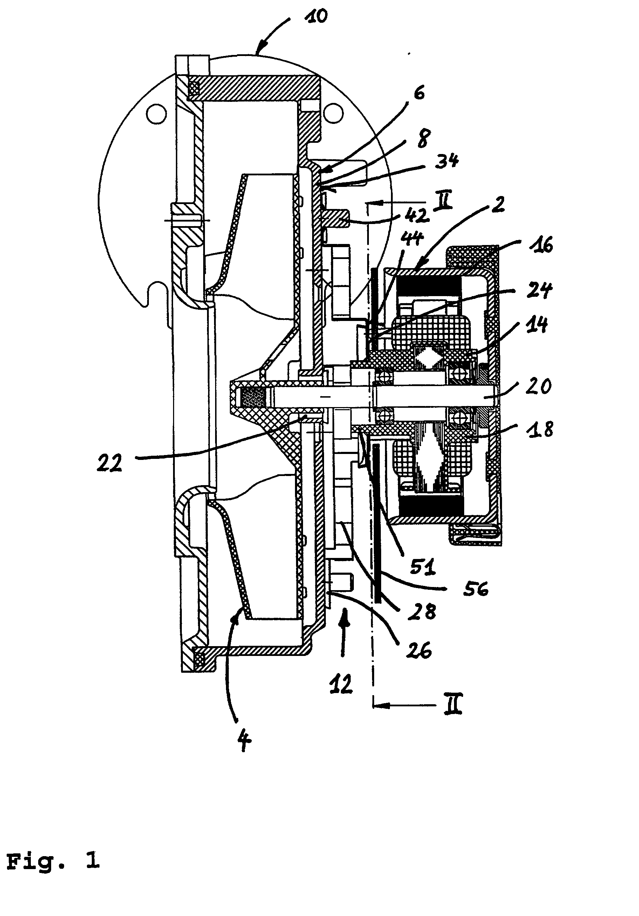

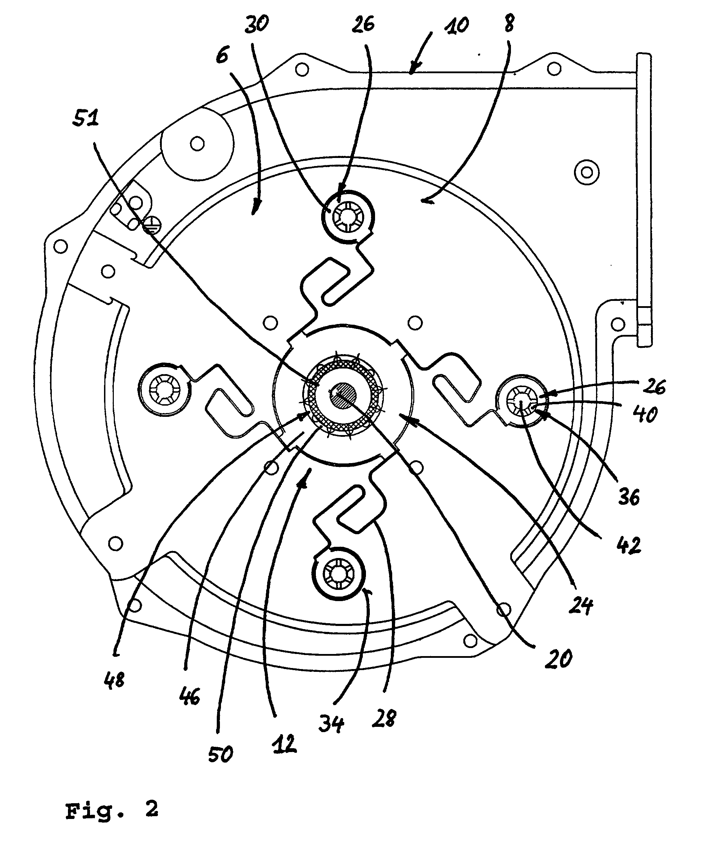

Bei dem in Fig. 1 bis 4 veranschaulichten, bevorzugten Anwendungsbeispiel ist - wie Fig. 1 und 2 zeigen - ein Elektromotor 2 zum Antrieb eines Gebläserades 4 vorgesehen und hierzu an einer als Trägerteil 6 fungierenden Gehäusewandung 8 eines Gebläses 10 (hier als Radialgebläse ausgebildet) gehaltert, und zwar über ein im wesentlichen scheibenförmiges Trägerelement 12. Der Elektromotor 2 ist bevorzugt als Außenläufermotor ausgebildet, wobei ein Stator 14 von einem Außenläufer 16 umschlossen ist. Der Außenläufer 16 ist über eine innerhalb eines Lagertragrohrs 18 des Stators 14 drehbar gelagerte Motorwelle 20 mit dem Gebläserad 4 drehfest verbunden, so daß der Elektromotor 2 mit dem Gebläserad 4 praktisch eine Einheit bildet, die über das Trägerelement 12 an der Gehäusewandung 8 befestigt ist. Dabei erstreckt sich Motorwelle 20 durch eine zentrische Öffnung 22 der Gehäusewandung 8 in das Gehäuse des Gebläses 10 hinein.

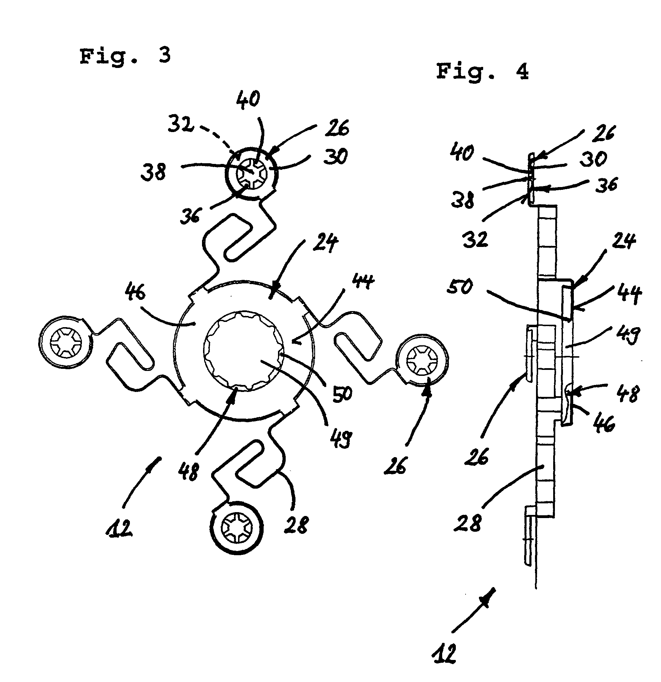

Hierbei ist nun das Trägerelement 12 - das als Einzelteil in Fig. 3 und 4 dargestellt ist - axial zwischen dem Elektromotor 2 und dem Trägerteil 6 bzw. der Gehäusewandung 8 des Gebläses 10 angeordnet. Das Trägerelement 12 weist einen mit dem Elektromotor 2 verbundenen Motor-Halteabschnitt 24 sowie einen mit dem Trägerteil 6 verbundenen bzw. auf der im wesentlichen ebenen Gehäusewandung 8 gehalterten Träger-Halteabschnitt 26 auf.

Die beiden Halteabschnitte 24, 26 sind in der ersten Ausführung der Erfindung über vier elastische, stegartige Verbindungsstücke 28 miteinander verbunden. Dabei sind diese Verbindungsstücke 28 derart ausgelegt, daß die beiden Halteabschnitte 24, 26 - und über diese somit auch der Elektromotor 2 und das Trägerteil 6 - dreidimensional, d.h. in allen Raumrichtungen, und zwar axial, radial und tangential, jeweils über einen bestimmten Bewegungsspielraum hinweg relativ zueinander elastisch beweglich sind. Die Verbindungsstücke 28 bewirken die eigentliche schwingungstechnische Entkopplung von Elektromotor 2 und Gebläse 10, insbesondere in tangentialer Richtung.

Die vier Verbindungsstücke 28 sind über den Umfang gleichmäßig verteilt angeordnet und somit jeweils um 90° in Umfangsrichtung zueinander beabstandet. Die beiden Halteabschnitte 24, 26 und die Verbindungsstücke 28 sind erfindungsgemäß miteinander einstückig, bevorzugt als ein Biege-Stanzteil aus Metall, insbesondere aus Federstahlblech, ausgebildet.

Das Trägerelement 12 ist - wie bereits erwähnt - axial zwischen dem Trägerteil 6 und dem Elektromotor 2 angeordnet. Dabei ist der Träger-Halteabschnitt 26 auf seiner von dem Elektromotor 2 axial abgekehrten Seite mit dem Trägerteil 6 verbunden, insbesondere flächig auf der Gehäusewandung 8 befestigt. Der Träger-Halteabschnitt 26 besteht in der ersten Ausführung der Erfindung aus vier peripher an den radial nach außen gerichteten Enden der Verbindungsstücke 28 angeordneten, insbesondere kreisförmigen, Scheiben, die aufgrund ihrer Anordnung relativ zum Motor-Halteabschnitt 24 und aufgrund ihrer Form im weiteren als Planetenscheiben 30 bezeichnet werden. Der Träger-Halteabschnitt 26 weist eine äußere Wandung 32 auf, die an einer Montagefläche 34 des Trägerteils 6 bzw. dessen Gehäusewandung 8 befestigbar ist. Zur Befestigung am Trägerteil 6 sind dabei am Träger-Halteabschnitt 26 erfindungsgemäß federelastische Klemmteile 36 vorgesehen. Bei diesen Klemmteilen 36 handelt es sich in bevorzugter Ausführung um Befestigungsaugen, die jeweils als Klemmbrille ausgebildet sind, d.h. rosettenartige, gleichmäßig über den Umfang einer zentrischen, insbesondere kreisförmigen, Öffnung 38 verteilte federelastische Haltezungen 40 aufweisen. Die gebläseseitige Befestigung der Klemmteile 36 erfolgt an stirnseitig am Gebläsegehäuse 8 angebrachten zapfenförmigen Erhebungen 42.

Der Motor-Halteabschnitt 24 ist als zentrale, insbesondere kreisscheibenförmige, eine innere zentrisch an dem Elektromotor 2 befestigbare Wandung 44 bildende Basisscheibe 46 ausgebildet, von der sich die Verbindungsstücke 28 radial nach außen zum Träger-Halteabschnitt 26 hin erstrecken. Der Motor-Halteabschnitt 24 ist auf seiner von dem Trägerteil 6 axial abgekehrten Seite mit dem Elektromotor 2 verbunden, und zwar insbesondere ebenfalls mittels eines federelastischen Klemmteiles 48, das dem Wesen nach ebenso aufgebaut sein kann wie die Klemmteile 36 des Träger-Halteabschnittes 26 und vorzugsweise an einer zentrischen Durchführöffnung 50 des Trägerelementes 12 für die Motorwelle 20 bzw. deren Lagertragrohr 18 angeordnet ist. Auch bei diesem Klemmteil 48 handelt es sich in bevorzugter Ausführung um ein Befestigungsauge, das als Klemmbrille mit Haltezungen 52 ausgebildet ist. Die Klemmbefestigung erfolgt an einem Dom 54 (Verlängerung des Lagertragrohrs 18 des Stators 14) am statorseitigen Ende des Motors 2.

Die Wandungen 32 und 44 der beiden Halteabschnitte 24, 26 sind gemäß Fig. 1 mit einem bestimmten Abstand axial versetzt, so daß das Trägerelement 12 praktisch als Doppelscheibe ausgebildet ist, wobei die Halteabschnitte 24, 26 in zwei zueinander beabstandeten, senkrecht zur Motorachse ausgerichteten Parallelebenen beidseitig der elastischen Verbindungsstücke 28 liegen. Die Verbindungsstücke 28 liegen axial im zwischen den Wandungen 32, 44 der beiden Halteabschnitte 24, 26 gebildeten Zwischenraum.

Jedes Verbindungsstück 28 besteht dabei aus einem elastischen Streifenmaterial, das bezüglich seiner über die Streifenbreite verlaufenden Querachse parallel zur Motorachse (Motorwelle 20) ausgerichtet ist. Dabei weist jedes Verbindungsstück 28 zwischen seinen radial äußeren und inneren Endbereichen - die insbesondere jeweils in radialer Richtung etwa auf dem gleichen Radius gegenüberliegend angeordnet sind - einen verlängerten, die elastische Beweglichkeit bzw. Verformbarkeit und damit die Relativbeweglichkeit der Halteabschnitte 24, 26 erhöhenden Verlauf auf.

Zweckmäßigerweise handelt es sich bei jedem Verbindungsstück 28 um einen zwischen seinen Endbereichen etwa S-bzw. mäanderförmigen Verlauf mit mehreren etwa radial und tangential ausgerichteten, über Biegungen 52a, 52b, 52c, 52d, 52e, 52f, 52g verbundenen Abschnitten 54a, 54b, 54c, 54d, 54e, 54f, 54g, 54h.

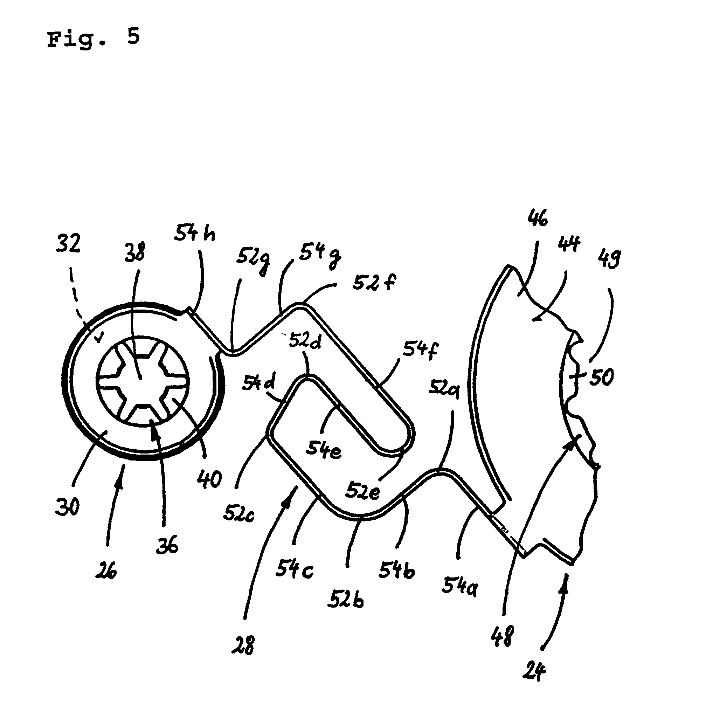

Die Form der in den konkreten Ausführungsbeispielen nach Fig. 2, 3, 6 und 8 dargestellten Verbindungsstücke 28 ist identisch und wird nachfolgend unter Bezugnahme auf Fig. 5 (nur dort mit Bezugszeichen bezeichnet) im Detail erläutert. Wie Fig. 5 zeigt, geht ein erster, etwa tangential am Motor-Halteabschnitt 24 ausgerichteter, radial innerer Abschnitt 54a über eine etwa 90°-Biegung 52a in einen zweiten, etwa radial gerichteten Abschnitt 54b und dann über eine weitere etwa 90°-Biegung 52b in einen dritten etwa tangential verlaufenden Abschnitt 54c über. An den dritten Abschnitt 54c schließt sich über eine dritte etwa 90°-Biegung 52c ein vierter, etwa radial verlaufender Abschnitt 54d an, der wiederum über eine vierte, etwa 90°-Biegung 52d in einen fünften etwa tangential verlaufenden Abschnitt 54e übergeht. Dieser fünfte Abschnitt 54e geht dann über eine fünfte, etwa 180°-Biegung 52e in einen weiteren (sechsten) etwa tangential angeordneten Abschnitt 54f über, der etwa in der Verlängerung des ersten tangential gerichteten Abschnitts 54a liegt. Zwischen der erste Abschnitt 54a und sechsten Abschnitt 54f liegt somit eine Schlaufe. An den sechsten Abschnitt 54f schließt sich über eine weitere 90°-Biegung 52f ein siebenter, etwa radial verlaufender Abschnitt 54g an, der direkt auf den Träger-Halteabschnitt 26 zuläuft. Dieser geht schließlich über eine letzte Biegung 52g in einen radial äußeren, etwa tangentialen Abschnitt 54g derart über, daß hierdurch die beiden an den Halteabschnitten 24, 26 zu befestigenden Endbereiche (erster Abschnitt 54a, letzter Abschnitt 54g) einander im wesentlichen radial gegenüberliegen.

Was nun die Montage betrifft, so ist diese außerordentlich einfach, da das erfindungsgemäße einstückige Trägerelement 12 sofort montagebereit ist. Es kann zunächst in einfacher Weise mit dem Elektromotor 2 verbunden werden, wobei das federelastische Klemmteil des Motor-Halteabschnittes 24 auf den Dom 51 des Elektromotors 2 in axialer Richtung aufgeschoben und dort, insbesondere unter Aufspreizung der rosettenartigen Federzungen 40, verklemmt wird. Der Dom 51 des Elektromotors 2 wird dann - insbesondere über die Federzungen der Klemmbrille - gegen eine axiale Rückverschiebung gesichert gehalten. Das Klemmteil läßt sich nicht mehr abziehen, weil es sich am Elektromotor 2 verkrallt. Anschließend wird die dem Motor 2 zugewandte Gehäusewandung 8 des Gebläses 10 auf gleiche Weise mit dem Träger-Halteabschnitt 26 verbunden. Die Befestigung kann dabei einfach von der Außenseite des Gebläses 10 her vorgenommen werden.

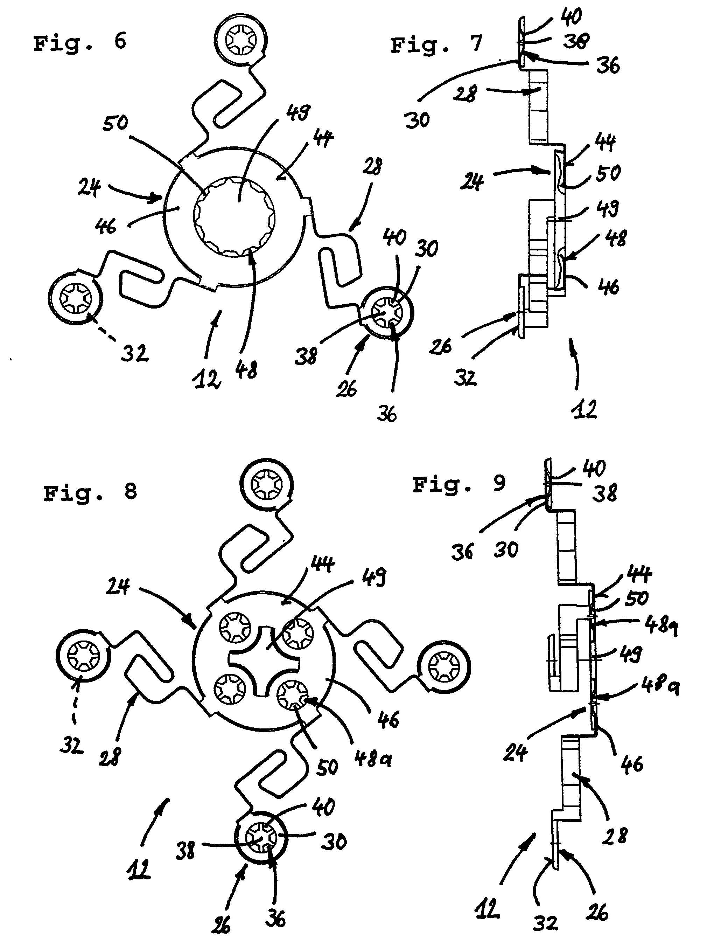

Das in Fig. 6 und 7 veranschaulichte, bevorzugte Anwendungsbeispiel unterscheidet sich vom ersten Ausführungsbeispiel dadurch, daß nicht vier, sondern nur drei Verbindungsstücke 28 und Planetenscheiben 30 im Träger-Halteabschnitt 26 vorgesehen sind, die über den Umfang gleichmäßig verteilt angeordnet und somit jeweils um 120° in Umfangsrichtung zueinander beabstandet sind. Durch diese Ausführung reduziert sich der Montageaufwand zur Verbindung des Gebläses 10 mit dem Trägerelement 12. Im übrigen weist die zweite Ausführung den gleichen Aufbau wie die erste Ausführung auf.

Das in Fig. 8 und 9 veranschaulichte, bevorzugte Anwendungsbeispiel unterscheidet sich vom ersten Ausführungsbeispiel dadurch, daß der Motor-Halteabschnitt 24 zum Verbinden mit dem Elektromotor 2 nicht nur ein federelastisches Klemmteil 48, sondern vier derartige Klemmteile 48a aufweist, die gleichmäßig verteilt auf dem Umfang eines Kreises angeordnet sind, der konzentrisch zur zentrischen Durchführöffnung 49 des Trägerelementes 12 für die Motorwelle 20 verläuft. Durch diese Ausführung erhöht sich die Sicherheit der Verbindung des Elektromotors 2 mit dem Trägerelement 12. Am Elektromotor 2 sind für diese Ausführung vier Befestigungszapfen (nicht dargestellt) vorzusehen, in die die Basisscheibe 46 klemmend eingreift. Im übrigen weist auch die dritte Ausführung den gleichen Aufbau wie die erste Ausführung auf.

Durch die Erfindung wird eine wirksame Schwingungsisolierung in allen Raumrichtungen erreicht. Dies geschieht einerseits durch die charakteristische Ausbildung der Verbindungsstücke 28, andererseits wirken dabei auch die Klemmteile 36, 48, 48a mit, die in gewissen engen Grenzen eine (schwingungsdämpfende) axiale Bewegung zulassen. Insgesamt wird vorteilhafterweise durch die Erfindung eine sich selbst begrenzende Schwingungsbewegung des Trägerelementes 12 erreicht, ohne daß dazu spezielle Anschlagteile notwendig wären.

Die Erfindung ist nicht auf die dargestellten Ausführungsbeispiele beschränkt, sondern umfaßt auch alle im Sinne der Erfindung gleichwirkenden Ausführungen. So wurde auf die mögliche Anwendung der Erfindung für Innenläufermotoren bereits verwiesen. Außerdem wurde bereits darauf verwiesen, daß die Befestigung des Motor-Halteabschnittes 26 am Elektromotor 2 auch durch eine Verschraubung erfolgen kann. Die dargestellte Ausführung besitzt jedoch gegenüber einer Verschraubung den Vorteil, daß das als Schwingteil fungierende Trägerelernent 12 nicht nur zusammen mit dem Elektromotor 2 Relativbewegungen gegenüber dem Trägerteil 6, sondern auch selbst Relativbewegungen gegenüber dem Elektromotor 2 ausführen kann, wodurch sich vorteilhafterweise seine schwingungsisolierende Effizienz erhöht. Außerdem ist die beschriebene Verbindung montagetechnisch weniger aufwendig, wobei keine verlierbaren Teile verwendet werden müssen.

Des weiteren kann der Fachmann zusätzliche zweckmäßige technische Maßnahmen und Details, wie beispielsweise eine Abdichtung der Motorwelle, vorsehen - ähnlich, wie dies auch dem deutschen Gebrauchsmuster DE 297 22 852 U1 zu entnehmen ist. Wie Fig. 1 zeigt, kann axial zwischen dem Elektromotor 2 und dem Trägerelement 12, etwa parallel zu den Lagebenenen des Motor-Halteabschnitts 24 und des Träger-Halteabschnitts 26, eine Leiterplatte 56 angeordnet sein, die eine Ansteuerschaltung für den Motor 2 tragen kann.

### Bezugszeichen

- 2: Elektromotor
- 4: Gebläserad
- 6: Trägerteil
- 8: Gehäusewandung
- 10: Gebläse
- 12: Trägerelement
- 14: Stator von 2
- 16: Außenläufer von 2
- 18: Lagertragrohr von 2
- 20: Motorwelle von 2
- 22: Öffnung in 8 für 20
- 24: Motor-Halteabschnitt von 12
- 26: Träger-Halteabschnitt von 12
- 28: Verbindungsstück für 24 und 26
- 30: Planetenscheibe von 26
- 32: Wandung von 26
- 34: Montagefläche an 6
- 36: Klemmteil an 26
- 38: Öffnung von 36
- 40: Haltezunge von 36
- 42: zapfenförmige Erhebung auf 6
- 44: Wandung von 24
- 46: Basisscheibe von 24
- 48, 48a: Klemmteil an 24
- 49: Durchführungsöffnung in 12 für 20 bzw. 18
- 50: Haltezunge von 48
- 51: Dom an 2
- 52a bis g: Biegungen von 28
- 54a bis h: Abschnitte von 28
- 56: Leiterplatte

## Patentansprüche

1. Trägerelement (12) zur schwingungsisolierenden Halterung eines Elektromotors (2) an einem Trägerteil (6), welches Trägerelement (12) einen Motor-Halteabschnitt (24) zum Verbinden mit dem Elektromotor (2) und einen Träger-Halteabschnitt (26) zum Verbinden mit dem Trägerteil (6) aufweist, wobei die beiden Halteabschnitte (24, 26) über elastische, stegartige Verbindungsstücke (28) verbunden sind, die derart ausgelegt sind, daß die beiden Halteabschnitte (24, 26) dreidimensional, in allen Raumrichtungen, und zwar axial, radial und tangential, über einen bestimmten Bewegungsspielraum hinweg relativ zueinander elastisch beweglich sind, wobei die beiden Halteabschnitte (24, 26) und die Verbindungsstücke (28) miteinander einstückig ausgebildet sind,
**dadurch gekennzeichnet, daß** der Träger-Halteabschnitt (26) zur Befestigung am Trägerteil (6) federelastische Klemmteile (36) aufweist.

2. Trägerelement (12) nach Anspruch 1,
**dadurch gekennzeichnet, daß** der Träger-Halteabschnitt (26) zur Befestigung am Trägerteil (6) drei oder vier federelastische Klemmteile (36) aufweist.

3. Trägerelement (12) nach Anspruch 1 oder 2,
**dadurch gekennzeichnet, daß** der Motor-Halteabschnitt (24) als zentrale, insbesondere kreisförmige, Basisscheibe (46) ausgebildet ist, von der sich die Verbindungsstücke (28) radial nach außen erstrecken.

4. Trägerelement (12) nach einem der Ansprüche 1 bis 3,
**dadurch gekennzeichnet, daß** der Motor-Halteabschnitt (24) zum Verbinden mit dem Elektromotor (2) mindestens ein federelastisches Klemmteil (48) aufweist, das vorzugsweise an einer zentrischen Durchführöffnung (49) des Trägerelementes (12) für eine Motorwelle (20) angeordnet ist.

5. Trägerelement (12) nach einem der Ansprüche 1 bis 4,
**dadurch gekennzeichnet, daß** der Motor-Halteabschnitt (24) zum Verbinden mit dem Elektromotor (2) mehrere, insbesondere vier, federelastische Klemmteile (48a) aufweist, die vorzugsweise konzentrisch um eine zentrische Durchführöffnung (49) des Trägerelementes (12) für eine Motorwelle (20) angeordnet sind.

6. Trägerelement (12) nach einem der Ansprüche 1 bis 5,
**dadurch gekennzeichnet, daß** die federelastischen Klemmteile (36, 48, 48a) als Klemmbrille ausgebildet sind.

7. Trägerelement (12) nach einem der Ansprüche 1 bis 6,
**dadurch gekennzeichnet, daß** die Halteabschnitte (24, 26) und die Verbindungsstücke (28) als ein Biege-Stanzteil aus Metall, insbesondere aus Federstahlblech, ausgebildet sind.

8. Trägerelement (12) nach einem der Ansprüche 1 bis 7,
**dadurch gekennzeichnet, daß** die Halteabschnitte (24, 26) in zwei zueinander beabstandeten, senkrecht zur Motorachse ausgerichteten Parallelebenen liegen.

9. Trägerelement (12) nach einem der Ansprüche 1 bis 8 ,
**dadurch gekennzeichnet, daß** jedes Verbindungsstück (28) aus einem elastischen Streifenmaterial besteht, das bezüglich seiner über die Streifenbreite verlaufenden Querachse parallel zur Motorachse (20) ausgerichtet ist.

10. Trägerelement (12) nach einem der Ansprüche 1 bis 9,
**dadurch gekennzeichnet, daß** jedes Verbindungsstück (28) zwischen seinen radial äußeren und inneren, insbesondere jeweils in radialer Richtung etwa auf dem gleichen Radius gegenüberliegenden Endbereichen einen verlängerten, die elastische Beweglichkeit erhöhenden Verlauf aufweist, wozu vorzugsweise jedes Verbindungsstück (28) zwischen seinen Endbereichen einen etwa S-förmigen oder mäanderförmigen Verlauf mit mehreren über Biegungen (52a, 52b, 52c, 52d, 52e, 52f, 52g) verbundenen Abschnitten (54a, 54b, 54c, 54d, 54e, 54f, 54g, 54h) aufweist.

11. Anordnung zur schwingungsisolierenden Halterung eines Elektromotors (2) an einem Trägerteil (6), mit einem Elektromotor (2) und mit einem Trägerteil (6) sowie mit einem Trägerelement (12),
**dadurch gekennzeichnet, daß** das Trägerelement (1) nach einem der Ansprüche 1 bis 10 ausgebildet und axial zwischen dem Elektromotor (2) und dem Trägerelement (12) eine Leiterplatte (56) angeordnet ist.

12. Anordnung nach Anspruch 11,
**dadurch gekennzeichnet, daß** das Trägerteil (6) ein Gebläse (10) ist.

## Claims

1. Support element (12) for the vibration-isolating securing of an electric motor (2) on a support part (6), which support element (12) has a motor-holding section (24) for connecting to the electric motor (2), and a support-holding section (26) for connecting to the support part (6), the two holding sections (24, 26) being connected via elastic, web-like connecting pieces (28) which are designed in such a manner that the two holding sections (24, 26) are elastically movable relative to each other three-dimensionally, in all spatial directions, specifically axially, radially and tangentially, over a certain movement clearance, the two holding sections (24, 26) and the connecting pieces (28) being of integral design with each other, **characterized in that** the support-holding section (26) has spring-elastic clamping parts (36) for fastening it to the support part (6).

2. Support element (12) according to Claim 1, **characterized in that** the support-holding section (26) has three or four spring-elastic clamping parts (36) for fastening it to the support part (6).

3. Support element (12) according to Claim 1 or 2, **characterized in that** the motor-holding section (24) is designed as a central, in particular circular, base disc (46) from which the connecting pieces (28) extend radially outwards.

4. Support element (12) according to one of Claims 1 to 3, **characterized in that** the motor-holding section (24) has, for connecting it to the electric motor (2), at least one spring-elastic clamping part (48) which is preferably arranged on a central passage (49) in the support element (12) for a motor shaft (20).

5. Support element (12) according to one of claims 1 to 4, **characterized in that** the motor-holding section (24) has, for connecting it to the electric motor (2), a plurality of spring-elastic clamping parts (48a), in particular four clamping parts, which are preferably arranged concentrically about a central passage opening (49) in the support element (12) for a motor shaft (20).

6. Support element (12) according to one of Claims 1 to 5, **characterized in that** the spring-elastic clamping parts (36, 48, 48a) are designed as clamping spectacles.

7. Support element (12) according to one of claims 1 to 6, **characterized in that** the holding sections (24, 26) and the connecting pieces (28) are designed as a flexible punched part of metal, in particular of spring steel sheet.

8. Support element (12) according to one of Claims 1 to 7, **characterized in that** the holding sections (24, 26) lie in two parallel planes which are spaced apart from each other and are orientated perpendicularly with respect to the motor axis.

9. Support element (12) according to one of claims 1 to 8, **characterized in that** each connecting piece (28) consists of an elastic strip material which is orientated with regard to its transverse axis, which runs over the width of the strip, parallel to the motor axis (20).

10. Support element (12) according to one of Claims 1 to 9, **characterized in that** each connecting piece (28), between its radially outer and inner end regions lying opposite approximately on the same radius in particular in each case in the radial direction, has an extended profile which increases the elastic mobility, for which purpose each connecting piece (28) preferably has between its end sections an approximately S-shaped or meandering profile with a plurality of sections (54a, 54b, 54c, 54d, 54e, 54f, 54g, 54h) connected via bending sections (52a, 52b, 52c, 52d, 52e, 52f, 52g).

11. Arrangement for the vibration-isolating securing of an electric motor (2) on a support part (6), having an electric motor (2) and having a support part (6), and also having a support element (12), **characterized in that** the support element (1) is designed according to one of Claims 1 to 10, and a printed circuit board (56) is arranged axially between the electric motor (2) and the support element (12).

12. Arrangement according to Claim 11, **characterized in that** the support part (6) is a fan (10).

## Revendications

1. Elément de support (12) destiné à la fixation, isolée des vibrations, d'un moteur électrique (2) à une partie de support (6), lequel élément de support (12) comprend un segment (24) de fixation au moteur destiné à être relié au moteur électrique (2) et un segment (26) de fixation au support, destiné à être relié à la partie de support (6), les deux segments de fixation (24, 26) étant reliés par l'intermédiaire de pièces de liaison élastiques (28) en forme d'entretoises, qui sont construites de manière que les deux segments de fixation (24, 26) soient mobiles élastiquement l'un par rapport à l'autre, tridimensionnellement dans toutes les directions de l'espace, et plus précisément, dans les directions axiales, radiales et tangentielles, sur un certain espace de jeu de mouvement, les deux segments de fixation (24, 26) et les pièces de liaison (28) étant d'un seul tenant entre eux,
**caractérisé en ce que** le segment de fixation au support (26) présente des éléments de serrage (36) élastiques à la façon de ressorts pour la fixation à la partie de support (6).

2. Elément de support (12) selon la revendication 1,
**caractérisé en ce que** le segment de fixation au support (26) présente trois ou quatre parties de serrage (36) élastiques à la façon de ressorts, pour la fixation à la partie de support (6).

3. Elément de support (12) selon la revendication 1 ou 2,
**caractérisé en ce que** le segment de fixation au moteur (24) est réalisé sous la forme d'un disque de base central (46), en particulier circulaire, d'où les pièces de liaison (28) partent radialement vers l'extérieur.

4. Elément de support (12) selon une des revendications 1 à 3,
**caractérisé en ce que** le segment de fixation au moteur (24) présente, pour la liaison avec le moteur électrique (2), au moins une partie de serrage (48) élastique à la façon d'un ressort, qui est disposée de préférence au droit d'une ouverture de passage centrale (49) de l'élément de support (12) prévue pour un arbre (20) du moteur.

5. Elément de support (12) selon une des revendications 1 à 4,
**caractérisé en ce que** le segment de fixation au moteur (24) destiné à la liaison avec le moteur électrique (2) présente plusieurs, en particulier quatre, parties de serrage (48a) élastiques à la façon de ressorts, qui sont de préférence disposées concentriquement autour d'une ouverture de passage centrale (49) de l'élément de support (12) prévue pour un arbre de moteur (20).

6. Elément de support (12) selon une des revendications 1 à 5,
**caractérisé en ce que** les parties de serrage (36, 48, 48a) élastiques à la façon de ressorts sont constituées par des lunettes de serrage.

7. Elément de support (12) selon une des revendications 1 à 6,
**caractérisé en ce que** les segments de fixation (24, 26) et les pièces de liaison (28) sont constitués par une pièce découpée et pliée en métal, en particulier en tôle d'acier à ressorts.

8. Elément de support (12) selon une des revendications 1 à 7,
**caractérisé en ce que** les segments de fixation (24, 26) se trouvent dans deux plans parallèles, espacés l'un de l'autre, orientés perpendiculairement à l'axe du moteur.

9. Elément de support (12) selon une des revendications 1 à 8,
**caractérisé en ce que** chaque élément de liaison (28) est fait d'une matière en bande élastique dont l'axe transversal s'étendant sur la largeur de la bande est orienté parallèlement à l'axe (20) du moteur.

10. Elément de support (12) selon une des revendications 1 à 9,
**caractérisé en ce que** chaque pièce de liaison (28) présente, entre ses régions terminales radialement extérieure et radialement intérieure, en particulier opposées dans la direction radiale, à peu près sur le même rayon, un profil prolongé, qui accroît la mobilité élastique, ce pour quoi chaque pièce de liaison (28) présente, entre ses régions terminales, un profil à peu près en forme de S ou de méandre possédant plusieurs segments (54a, 54b, 54c, 54d, 54e, 54f, 54g, 54h) qui sont reliés par des anses (52a, 52b, 52c, 52d, 52e, 52f, 52g, 52h).

11. Dispositif pour la fixation isolée des vibrations d'un moteur électrique (2) à une partie de support (6), comprenant un moteur électrique (2) et une partie de support (6) ainsi qu'un élément de support (12),
**caractérisé en ce que** l'élément de support (12) est réalisé selon une des revendications 1 à 10 et un circuit imprimé (56) est disposé entre le moteur électrique (2) et l'élément de support (12).

12. Dispositif selon la revendication 11,
**caractérisé en ce que** la partie de support (2) est un ventilateur (10).
